# EUROPÄISCHE PATENTSCHRIFT

(11) **EP 3 516 362 B1**
(45) Veröffentlichungstag und Bekanntmachung des Hinweises auf die Patenterteilung: **18.08.2021**
(21) Anmeldenummer: 17771755.0
(22) Anmeldetag: 22.09.2017
(51) Int. Cl.: G01M 5/00

(54) **SCHWINGUNGSERREGER ZUR BELASTUNGSPRÜFUNG EINES ROTORBLATTS, SYSTEM, PRÜFSTAND UND ANORDNUNG MIT EINEM SOLCHEN SCHWINGUNGSERREGER SOWIE BETRIEBSVERFAHREN**
VIBRATION EXCITER FOR THE STRESS TESTING OF A ROTOR BLADE, SYSTEM, TEST BENCH, AND ARRANGEMENT COMPRISING SUCH A VIBRATION EXCITER, AND OPERATING METHOD
GÉNÉRATEUR DE VIBRATIONS POUR ESSAI DE CHARGE D'UNE PALE DE ROTOR, SYSTÈME, BANC D'ESSAI ET ENSEMBLE COMPRENANT CE GÉNÉRATEUR DE VIBRATIONS ET PROCÉDÉ DE FONCTIONNEMENT

(30) Priorität: 23.09.2016 DE 102016118010
(43) Veröffentlichungstag der Anmeldung: 31.07.2019
(73) Patentinhaber: Industrieanlagen-Betriebsgesellschaft mbH, 85521 Ottobrunn (DE)
(72) Erfinder: KÜBLER, Siegfried, 85521 Ottobrunn (DE); ABOU-EL-ELA, Ahmed, 82041 Oberhaching (DE); LEIMEGGER, Christian, 80333 München (DE); SANBERGER, Dietmar, 83700 Rottach-Egern (DE); URBAN, Armin, 83629 Weyarn (DE); KINSCHERF, Simon, 81477 München (DE)
(74) Vertreter: Kilchert, Jochen
(86) Internationale Anmeldenummer: PCT/EP2017/073998
(87) Internationale Veröffentlichungsnummer: WO 2018/055075

(56) Entgegenhaltungen:
- EP-A1- 2 741 068
- EP-A1- 2 848 910
- WO-A1-2008/145727

## Beschreibung

Die Erfindung betrifft einen Schwingungserreger zur Belastungsprüfung eines Rotorblatts. Ferner betrifft die Erfindung einen Prüfstand und eine Anordnung mit einem solchen Schwingungserreger sowie ein Betriebsverfahren.

Rotorblätter von Großwindkraftanlagen unterliegen im Betrieb hohen Belastungen. Um diese Belastungen unter Versuchsbedingungen nachzustellen und so die Betriebsfestigkeit der Rotorblätter ermitteln zu können, werden entsprechende Systeme zur Belastungsprüfung eingesetzt. EP 2 848 910 A1 beschreibt ein derartiges System, das dazu dient Dauerschwingversuche an Rotorblättern vorzunehmen. Im Wesentlichen soll das Rotorblatt in einen schwingenden Zustand versetzt werden, bei dem die Eigenschwingung des Rotorblatts erreicht wird.

Bei dem bekannten System wird dazu ein Schwingungserreger eingesetzt, der mit dem Rotorblatt verbunden wird. Der Schwingungserreger weist bewegte Massen mit einer Unwucht auf, die bei entsprechender Oszillation eine Schwingung auf das Rotorblatt übertragen. Solche Unwuchterreger, die mittels Lastscheren formschlüssig direkt mit dem Rotorblatt verbunden sind, belasten mit ihrer Eigenmasse, die bis etwa 5.000 kg beträgt, das Rotorblatt zusätzlich, so dass die insgesamt schwingende Masse erhöht ist. Damit reduziert sich die Eigenfrequenz des Gesamtsystems, wodurch die Prüfdauer, die sich üblicherweise nach einer vorbestimmten Anzahl von Schwingungszyklen bestimmt, erhöht wird. Zusätzlich beeinflusst die hohe Masse des Unwuchterregers die Biegelinie des Rotorblatts negativ und führt so zu verfälschten Messergebnissen. Schließlich ist auch zu berücksichtigen, dass das Mitschwingen des Unwuchterregers mit dem Rotorblatt dazu führt, dass der Unwuchterreger selbst hohen Beschleunigungen und Kräften ausgesetzt ist, was sich negativ auf die Lebensdauer des Unwuchterregers auswirkt.

Zusätzlich zu dem Unwuchterreger umfasst das bekannte System einen Hebelmechanismus, der mit einem Gegengewicht versehen ist. Der Hebelmechanismus wirkt auf das Rotorblatt, um eine statische Belastung des Rotorblatts einzustellen. Insbesondere hat sich gezeigt, dass durch die horizontale Aufhängung des Rotorblatts im Belastungsprüfsystem durch die auf das Rotorblatt wirkende Schwerkraft eine Biegeverformung eintritt, die im Realbetrieb nicht vorliegt. Dies kann mittels des Hebelmechanismus entsprechend eingestellt bzw. ausgeglichen werden.

Aus EP 2 741 068 A1 ist ein Testsystem zur Belastungsprüfung eines Rotorblatts bekannt, wobei als Schwingungserreger Unwuchterreger oder ein Linearmotor oder eine Seilwinde genutzt werden. Um die Eigenfrequenz der Schwingung des Rotorblatts zu erhöhen, sind zusätzlich hydropneumatische Federn vorgesehen, die die Steifigkeit des Rotorblatts erhöhen, so dass die für den Belastungstest erforderliche Zeit reduziert werden kann.

WO 2008/145727 A1 offenbart ein Testsystem für ein Rotorblatt, bei welchem ein Hydraulikzylinder als Schwingungserreger eingesetzt wird. Hydraulische Komponenten sind aufwändig und haben einen erhöhten Wartungsbedarf. Das bekannte Testsystem weist daher hohe Betriebs- und Wartungskosten auf.

Aufgabe der vorliegenden Erfindung ist es, einen Schwingungserreger zur Belastungsprüfung eines Rotorblatts, insbesondere eines Rotorblatts einer Großwindkraftanlage, anzugeben, der eine Verkürzung der Prüfzeit ermöglicht, verbesserte Ergebnisse im Hinblick auf den realen Betrieb des Rotorblatts hervorbringt und die Kosten für die Belastungsprüfung eines Rotorblatts reduziert. Ferner ist es Aufgabe der Erfindung, ein System, einen Prüfstand und eine Anordnung mit einem derartigen Schwingungserreger sowie ein Betriebsverfahren anzugeben.

Erfindungsgemäß wird diese Aufgabe im Hinblick auf den Schwingungserreger zur Belastungsprüfung durch den Gegenstand des Patentanspruchs 1, im Hinblick auf das System durch den Gegenstand des Patentanspruchs 8, im Hinblick auf den Prüfstand durch den Gegenstand des Patentanspruchs 9, im Hinblick auf die Anordnung durch den Gegenstand des Patentanspruchs 11 und im Hinblick auf das Betriebsverfahren durch den Gegenstand des Patentanspruchs 12 gelöst.

Die Erfindung beruht auf dem Gedanken, einen Schwingungserreger zur Belastungsprüfung eines Rotorblatts, insbesondere eines Rotorblatts einer Großwindkraftanlage, mit einem Direktantrieb anzugeben, der eine Motorwelle aufweist und über einen Hebelmechanismus mit dem Rotorblatt verbindbar ist. Der Hebelmechanismus weist eine Pendelstütze und einen Hebel auf, wobei die Pendelstütze mit einer Koppeleinrichtung zur Kraftübertragung auf das Rotorblatt verbunden ist. Der Hebel ist mit der Motorwelle drehfest und mit der Pendelstütze gelenkig verbunden.

Der erfindungsgemäße Schwingungserreger kann insbesondere zur Belastungsprüfung von Rotorblättern für Großwindkraftanlagen bzw. Windenergieanlagen eingesetzt werden. Die Erfindung ist darauf allerdings nicht eingeschränkt. Vielmehr ist es ebenfalls denkbar und beabsichtigt, den Schwingungserreger für die Belastungsprüfung anderer Arten von Rotorblättern einzusetzen. Insbesondere können mit dem erfindungsgemäßen Schwingungserreger Rotorblätter von Hubschraubern oder Tragflächen von Flugzeugen einer Belastungsprüfung unterzogen werden. Ebenso ist der Schwingungserreger zur Prüfung von Brückenbauteilen oder anderen elastischen Bauteilen einsetzbar.

Im Wesentlichen fußt die Erfindung auf der Idee, den Schwingungserreger von dem zu prüfenden Rotorblatt zu entkoppeln. Dazu ist der Hebelmechanismus vorgesehen, der den Direktantrieb mit dem Rotorblatt verbindet. Der Hebelmechanismus ist vorzugsweise weitgehend selbsttragend ausgebildet, so dass die Masse des Schwingungserregers die Prüfmasse nicht wesentlich erhöht. Insbesondere sind die Zusatzmassen, die auf das Rotorblatt wirken, im Unterschied zu Prüfsystemen, bei welchen Unwuchterreger auf dem Rotorblatt angeordnet sind, deutlich reduziert, so dass die Prüffrequenz, die sich im Wesentlichen an der Eigenfrequenz des Rotorblatts selbst orientiert, erhöht ist. Insbesondere können die auf das Rotorblatt wirkenden Zusatzmassen höchsten 200 kg betragen. Folglich reduzieren sich die Prüfzeit und damit auch die Kosten für einen Prüfdurchgang.

Die Verbindung zwischen dem Hebelmechanismus und dem Rotorblatt erfolgt durch die Koppeleinrichtung. Die Koppeleinrichtung kann insbesondere so ausgestaltet sein, dass das Rotorblatt im Wesentlichen mit der Koppeleinrichtung kraftschlüssig verbunden ist. Die Koppeleinrichtung ist mit der Pendelstütze verbunden, die wiederum am Hebel gelagert ist. Die Koppeleinrichtung kann insbesondere mit den Ausgleichselementen verschraubt sein. Vorzugsweise umfassen die Ausgleichselemente ein Elastomer, das auf einer Platte, insbesondere einer Aluminiumplatte, befestigt ist. Das Elastomer kann mit der Platte verklebt sein. Die Platte kann wenigstens eine Gewindebohrung aufweisen. Die Koppeleinrichtung kann mittels wenigstens einer Schraube mit der Platte verschraubt sein, wobei die Schraube insbesondere mit der Gewindebohrung zusammenwirkt. Das Elastomer kann auf einer der Platte abgewandten Seite mit dem Rotorblatt klebeverbunden sein.

Das Rotorblatt wird bei Anwendung der Erfindung zwar mit den Ausgleichselementen, der Koppeleinrichtung, der Pendelstütze und einem Anteil des Hebels belastet. Im Vergleich zu bisher bekannten Schwingungserregern, die als Unwuchterreger direkt auf dem Rotorblatt angebracht werden, reduziert sich die schwingende Masse dennoch erheblich, insbesondere auf etwa 1,2 % der Rotorblattmasse. Bisher bekannte Unwuchterreger erhöhen die schwingende Masse um etwa 30 % der Rotorblattmasse. Um das Hebelgewicht an der Pendelstütze weiter zu reduzieren, kann ein federndes Element oder ein Gegengewicht auf der der Pendelstütze gegenüberliegenden Hebelseite angebracht werden.

Ein weiterer Vorteil des erfindungsgemäßen Schwingungserregers besteht darin, dass durch den Direktantrieb, der über die Motorwelle direkt auf den Hebelmechanismus wirkt, eine besonders kompakte Bauweise des Schwingungserregers erreicht wird. Damit lässt sich der Schwingungserreger auch in bestehenden Testanlagen ohne größeren Aufwand nachrüsten.

Der Direktantrieb weist einen Elektromotor auf bzw. kann durch einen Elektromotor gebildet sein. Vorzugsweise kommt eine elektrische Synchronmaschine zum Einsatz. Der Elektromotor kann wassergekühlt sein. So erlaubt der Schwingungserreger einen energiesparenden Betrieb, da für die Funktion des Elektromotors lediglich eine Stromversorgung erforderlich ist. Auf eine Ölversorgungsanlage, die für den Betrieb von hydraulischen Systemen benötigt wird, kann verzichtet werden. Der Elektromotor ist zudem verschleiß- und wartungsarm, so dass die Lebensdauer des Schwingungserregers erhöht ist. Damit reduzieren sich die Betriebskosten eines mit dem Schwingungserreger ausgestatteten Belastungsprüfstands erheblich.

Generell ist vorgesehen, den Elektromotor so zu dimensionieren, dass er eine ausreichende Motorleistung bereitstellt, um eine Schwingung auf das zu prüfende Rotorblatt aufzubringen. Insbesondere kann der Elektromotor so ausgelegt sein, dass er die innere Reibung des Rotorblattmaterials und den Luftwiderstand überwindet und so das Rotorblatt in oder nahe seiner Eigenfrequenz in der Schwingung hält.

Der Direktantrieb kann einen Linearmotor oder einen Schwenkmotor aufweisen. Bevorzugt wird ein Schwenkmotor verwendet, da er gegenüber einem rotierenden Motor wesentlich höhere Drehmomente erzeugen kann. Bei einem rotierenden Elektromotor kann zur Übertragung des Drehmoments außerdem ein Übersetzungsgetriebe vorgesehen sein. Das erhöht jedoch Reibungsverluste und ist wegen der höheren Anzahl von Verschleißteilen wartungsintensiv. Bei Linearmotoren ist zwar keine Hebelübersetzung erforderlich, da die Linearmotoren große Wege zurücklegen können. Nachteilig sind hingegen eine hohe bewegte Masse, eine zusätzlich erforderliche Kühlung, notwendige Führungen und ein hoher Bauaufwand. Insofern ist es bevorzugt, einen Elektromotor mit einer oszillierenden Drehbewegung einzusetzen.

Der Direktantrieb weist erfindungsgemäß eine Steuerung auf, die zur Erzeugung einer zyklisch oszillierenden Bewegung des Elektromotors konfiguriert ist. Die Steuerung kann insbesondere so ausgebildet sein, dass das Drehmoment des Direktantriebs bzw. des Elektromotors so lange gesteigert wird, bis die erforderliche Wegamplitude am Rotorblatt oder eine vorbestimmte Dehnung an der Außenhaut des Rotorblatts erreicht wird. Dazu kann die Steuerung mit einer Messanordnung zur Messung der Wegamplitude bzw. zur Messung der Dehnung der Außenhaut des Rotorblatts verbunden sein. Die Messeinrichtung zur Messung der Dehnung der Außenhaut des Rotorblatts kann beispielsweise Dehnmessstreifen umfassen, die auf der Außenhaut des Rotorblatts positioniert oder positionierbar sind.

Zur Verbindung des Hebelmechanismus mit dem Rotorblatt kann die Koppeleinrichtung eine Auflagefläche für Ausgleichselemente und/oder Kraftübertragungselemente aufweisen, die mit dem Rotorblatt klebeverbindbar sind.

Die Ausgleichs- und/oder Kraftübertragungselemente können zusätzlich mit der Auflagefläche bzw. der Koppeleinrichtung verbindbar oder verbunden sein. Im Wesentlichen ist also vorgesehen, dass die Verbindung zwischen dem Schwingungserreger, insbesondere der Koppeleinrichtung, und dem Rotorblatt durch eine Klebung erfolgt. Damit wird von der im Stand der Technik bekannten formschlüssigen Verbindung mittels Lastscheren abgewichen. Der Verzicht auf die Formschlusselemente bzw. Lastscheren reduziert weiter die auf das Rotorblatt zusätzlich wirkende Masse und trägt somit zur Verkürzung der Prüfzeiten bei.

Besonders bevorzugt ist vorgesehen, dass für eine großflächige Krafteinleitung in das Rotorblatt mehrere, insbesondere fliesenartige, Ausgleichselemente vorgesehen sind. Durch die mehreren, insbesondere fliesenartigen, Ausgleichs- und/oder Kraftübertragungselemente wird eine besonders hohe Kraftübertragungsfläche bereitgestellt, so dass Punktbelastungen auf das Rotorblatt vermieden werden. Die großflächige und nachgiebige bzw. ausgleichende Krafteinleitung dient auch zur Erhöhung der Realitätsnähe der Prüfung. Diese versteift den Prüfling nicht nennenswert, was insbesondere bei Tragflächen von Flugzeugen wichtig ist, da diese aus meist dünnem Blech bestehen und Beulen oder Falten entstehen können. Je nach Prüflingsart sind auch eine Punktbelastung oder sonstige spezielle Krafteinleitungen möglich.

Bei einer bevorzugten Ausführungsform der Erfindung ist vorgesehen, dass die Pendelstütze mit der Koppeleinrichtung und/oder dem Hebel durch jeweils ein sphärisches Lager verbunden ist. Das sphärische Lager erlaubt Bewegungen in mehreren Raumrichtungen, so dass der Hebelmechanismus auch seitliche Schwingungen des Rotorblatts zulassen kann. Damit sind besonders komplexe Belastungsprüfungen des Rotorblatts möglich. Das System zur Belastungsprüfung lässt sich damit sehr flexibel einsetzen.

Der Hebel und/oder die Pendelstütze können außerdem längenverstellbar sein. Dies erhöht weiter die Flexibilität des Systems. Insbesondere können auf diese Weise unterschiedliche Rotorblätter, beispielsweise mit unterschiedlichen Längen oder Materialien, geprüft werden.

Insbesondere kann durch die Änderung des Hebelarmes (in Stufen oder stufenlos) die erforderliche Schwingungsamplitude des Rotorblatts eingestellt werden. Eine weitere Möglichkeit zur Einstellung der Schwingungsamplitude des Rotorblatts besteht darin, den Hebelarm-Schwenkwinkel zu verstellen. Insofern ist bevorzugt vorgesehen, dass der Winkel zwischen dem Hebel und der Pendelstütze verstellbar ist. Durch Verringerung des wirksamen Hebelarmes kann außerdem die Kraft an der Pendelstütze, sowie die Hubfrequenz weiter erhöht werden. Ebenso kann durch Erweiterung des wirksamen Hebelarms die Kraft an der Pendelstütze vermindert werden. Gleichzeitig kann das Drehmoment des Direktantriebs stufenlos variiert werden.

Durch die Längenverstellbarkeit der Pendelstütze wird erreicht, dass Rotorblätter in unterschiedlichen hoch montierten Positionen getestet werden können. Das erhöht die Einsatzvielfalt des Schwingungserregers. Die gewünschte Schwingfrequenz wird durch die Eigenfrequenz des zu prüfenden Rotorblatts vorgegeben und kann am Direktantrieb beispielsweise mittels Frequenzumrichter stufenlos eingestellt werden.

Zur Arretierung des Hebels und/oder der Pendelstütze in unterschiedlichen Längen können der Hebel und/oder die Pendelstütze Rastpunkte aufweisen. Die Rastpunkte erleichtern die Einstellung unterschiedlicher Längen des Hebels und/oder der Pendelstütze. Alternativ kann vorgesehen sein, dass die Verstellung der Länge des Hebels und/oder der Pendelstütze stufenlos erfolgt, wobei auch eine stufenlose Arretierung, beispielsweise mittels Reibschluss, möglich ist. Insbesondere ist im Rahmen einer bevorzugten Ausführungsform der Erfindung folglich vorgesehen, dass der Hebel und/oder die Pendelstütze Rastpunkte oder eine Einrichtung zur stufenlosen Positionseinstellung aufweist, so dass die Pendelstütze zur Einstellung unterschiedlicher Hebelarmlängen an unterschiedlichen Positionen entlang des Hebels arretierbar ist.

Ferner ist es bevorzugt, wenn die Pendelstütze einen Verstellmechanismus für die Längenverstellung aufweist, der eine mittels Reibschluss voreinstellbare Lastgrenze aufweist. Die Verstelleinrichtung bildet insofern ein Sicherheitselement, da sich die Länge der Pendelstütze bei Überschreiten der voreinstellbaren Lastgrenze verändert. Wenn die voreinstellbare Lastgrenze überschritten wird, wird die Haftreibung innerhalb des Verstellmechanismus überwunden, so dass die Länge der Pendelstütze verändert wird. Auf diese Weise kann eine Beschädigung der Pendelstütze bei Überlastung effizient vermieden werden.

Insbesondere kann vorgesehen sein, dass der Schwingungserreger bei Überschreiten einer voreingestellten Lastgrenze abschaltet und keine Kraft mehr auf das Rotorblatt ausübt. Ein in der Pendelstütze eingebauter Kraftsensor kann die eingestellte Lastgrenze überwachen und den Schwingungserreger beim Überschreiten der Lastgrenze abschalten. Zusätzlich kann die Stromaufnahme des Elektromotors überwacht und der Elektromotor bei Überschreiten des eingestellten Wertes kraftlos geschaltet werden.

Selbst wenn der Elektromotor nicht abschaltet, wirkt dieser als eine Art Sicherheitskupplung, d.h. beim Überschreiten des voreingestellten Drehmomentes wird der Elektromotor durch die Rückstellkraft des Rotorblattes ohne Erhöhung des Drehmomentes vor oder zurückgedreht. Damit ist sichergestellt, dass keines der Last übertragenden Elemente durch Überlastung gefährdet ist.

Die Erfindung erstreckt sich ferner auf ein System zur Belastungsprüfung eines Rotorblatts, insbesondere eines Rotorblatts einer Großwindkraftanlage, mit einer ortsfest positionierbaren oder positionierten Tragstruktur und wenigstens einem zuvor beschriebenen Schwingungserreger, wobei der Schwingungserreger, insbesondere der Direktantrieb, ortsfest positionierbar oder positioniert ist. An der Tragstruktur ist ein axiales Ende des Rotorblatts befestigbar.

Um eine Anpassung des Systems an unterschiedliche Rotorblätter zu erleichtern, ist bevorzugt vorgesehen, dass der gesamte Schwingungserreger parallel zu einer Längsachse des Rotorblatts verschiebbar ist. Der Schwingungserreger kann in der gewünschten Position mittels Ankerschienen arretiert werden, die parallel zur Längsachse des Rotorblatts verlaufen. Vorzugsweise sind zwei Ankerschienen vorgesehen. Der Direktantrieb, der Hebel und die Pendelstütze können gemeinsam auch in Querrichtung zur Längsachse des Rotorblatts verschiebbar sein. Auf diese Weise können einfach unterschiedliche Lasteinleitungspunkte am Rotorblatt gewählt werden.

Ein nebengeordneter Aspekt der Erfindung betrifft einen Prüfstand für ein Rotorblatt, insbesondere für ein Rotorblatt einer Großwindkraftanlage, wobei der Prüfstand wenigstens zwei zuvor beschriebene Schwingungserreger oder Systeme zur Belastungsprüfung eines Rotorblatts aufweist. Bei dem erfindungsgemäßen Prüfstand kann in einer bevorzugten Variante vorgesehen sein, dass ein erster Schwingungserreger zur Anregung einer Schwingung des Rotorblatts in Schlagrichtung im Wesentlichen unterhalb des Rotorblatts und ein zweiter Schwingungserreger zur Anregung einer Schwingung des Rotorblatts in Schwenkrichtung im Wesentlichen seitlich des Rotorblatts positionierbar sind.

Alternativ kann vorgesehen sein, dass der Prüfstand zwar nur einen Schwingungserreger bzw. nur ein System zur Belastungsprüfung aufweist, jedoch eine Drehvorrichtung zum Drehen des Rotorblatts umfasst. Auf diese Weise kann mittels eines einzigen Schwingungserregers eine Prüfung des Rotorblatts in Schwenkrichtung und in Schlagrichtung erreicht werden. Dazu ist das Rotorblatt lediglich um etwa 90° zu drehen.

Im Allgemeinen kann der hier beschriebene Schwingungserreger nicht nur zur Belastungsprüfung des Rotors durch Aufbringung einer Schwingung in Schlagrichtung eingesetzt werden, sondern ermöglicht auch die Anregung einer Schwingung des Rotorblatts in Schwenkrichtung. Indem zwei derartige Schwingungserreger im Wesentlichen rechtwinklig zueinander angeordnet werden, können beide Schwingungsprüfungen mit demselben Prüfstand durchgeführt werden. Die Schwingungserreger können auch gleichzeitig betrieben werden, so dass eine besonders komplexe Prüfsituation herbeigeführt werden kann. Dies erhöht die Flexibilität des Prüfstands und ermöglicht ferner eine besonders effiziente Durchführung von Belastungsprüfungen, die die im realen Betrieb auftretenden Belastungen auf ein Rotorblatt gut abbilden.

Ein weiterer nebengeordneter Aspekt der Erfindung betrifft eine Anordnung mit einem zuvor beschriebenen System oder einem zuvor beschriebenen Prüfstand und einem Rotorblatt, insbesondere einem Rotorblatt für eine Großwindkraftanlage. Bei der erfindungsgemäßen Anordnung ist ein axiales Ende des Rotorblatts, insbesondere eine Rotorblattwurzel, an der Tragstruktur befestigt. Das Rotorblatt liegt an einer von der Tragstruktur beabstandeten Position mittels Ausgleichselementen auf der Koppeleinrichtung auf. Insbesondere ist das Rotorblatt mittels den Ausgleichselementen mit der Koppeleinrichtung verbunden. Die Ausgleichselemente sind mit einer Außenhaut des Rotorblatts klebeverbunden. Die mit der Außenhaut des Rotorblatts klebeverbundenen Ausgleichselemente können zusätzlich mit der Koppeleinrichtung fest, aber lösbar, verbunden sein.

Im Rahmen der vorliegenden Anmeldung wird außerdem ein Verfahren zum Betreiben eines Schwingungserregers, eines Systems, eines Prüfstands oder einer Anordnung, wie sie zuvor beschrieben sind, offenbart und beansprucht, wobei der Direktantrieb eine oszillierende Rotationsbewegung ausführt und eine Schwingungsanregung erzeugt. Die Schwingungsanregung ist über den Hebelmechanismus auf das Rotorblatt übertragbar bzw. wird auf das Rotorblatt übertragen. Die Schwingungsanregung, vorzugsweise eine harmonische, beispielsweise sinusförmige, Schwingungsanregung, kann momentengesteuert, kraft-, drehzahl- und/oder positionsgeregelt an Hand antriebsinterner oder externer Sensorik erfolgen. Die oszillierende Rotationsbewegung erfolgt vorzugsweise in einem Winkelbereich zwischen -30° und +30°.

Das Drehmoment wird zur Anregung einer Schwingung des Rotorblatts über den Hebelmechanismus auf das Rotorblatt übertragen bzw. ist auf das Rotorblatt übertragbar. Die oszillierende Rotationsbewegung des Direktantriebs, insbesondere des Elektromotors, ist vorteilhaft, da auf aufwändige Umlenkelemente verzichtet werden kann. Das vereinfacht den konstruktiven Aufbau des für die Durchführung des Verfahrens erforderlichen Systems.

Bei dem erfindungsgemäßen Verfahren ist in einer bevorzugten Variante vorgesehen, dass der Direktantrieb bzw. der Elektromotor mit einer variablen Drehfrequenz zwischen 0,1 Hz und 2,5 Hz, insbesondere zwischen 0,2 Hz und 1,5 Hz, insbesondere zwischen 0,4 Hz und 1,2 Hz, vorzugsweise zwischen 0,6 Hz und 1 Hz, betrieben wird. Beispielsweise kann der Direktantrieb zur Anregung einer Eigenschwingung des Rotorblatts in Schlagrichtung mit einer Drehfrequenz von 0,6 Hz oszillieren. Falls beispielsweise eine Eigenschwingung des Rotorblatts in Schwenkrichtung angeregt werden soll, ist es bevorzugt, den Direktantrieb mit einer Drehfrequenz von 1 Hz zu oszillieren. Grundsätzlich kann die Drehfrequenz innerhalb der physikalisch vorgegebenen Grenzen beliebig variiert werden. Die vorgenannten Drehfrequenzen sind insbesondere für die Prüfung von Rotorblättern von Windkraftanlagen geeignet. Bei Anwendung des erfindungsgemäßen Verfahrens zur Belastungsprüfung anderer Prüflinge, beispielsweise Rotorblättern von Hubschraubern, können andere Drehfrequenzen bevorzugt sein.

Die Erfindung wird im Folgenden anhand von Ausführungsbeispielen unter Bezugnahme auf die beigefügten, schematischen Zeichnungen näher erläutert. Darin zeigen
- Fig. 1: eine Seitenansicht eines Schwingungserregers für ein erfindungsgemäßes System nach einem bevorzugten Ausführungsbeispiel;
- Fig. 2: eine Vorderansicht des Schwingungserregers gemäß Figur 1;
- Fig. 3: eine Vorderansicht eines Prüfstands mit zwei Schwingungserregern zur Anregung einer Schwingung des Rotorblatts in Schwenkrichtung und Schlagrichtung;
- Fig. 4: eine Seitenansicht des Hebelmechanismus eines erfindungsgemäßen Schwingungserregers nach einem bevorzugten Ausführungsbeispiel;
- Fig. 5: eine Vorderansicht des Hebelmechanismus gemäß Fig. 4;
- Fig. 6: eine Seitenansicht eines Schwingungserregers für ein erfindungsgemäßes System nach einem weiteren bevorzugten Ausführungsbeispiel gemäß Schnitt A-A in Fig.7;
- Fig. 7: eine Draufsicht auf den Schwingungserreger gemäß Fig. 9;
- Fig. 8: eine Seitenansicht eines Prüfstands mit dem Schwingungserreger und einem Rotorblatt im Betrieb; und
- Fig. 9: eine Schnittansicht des Schwingungserregers entlang des Schnitts B-B gemäß Fig. 7

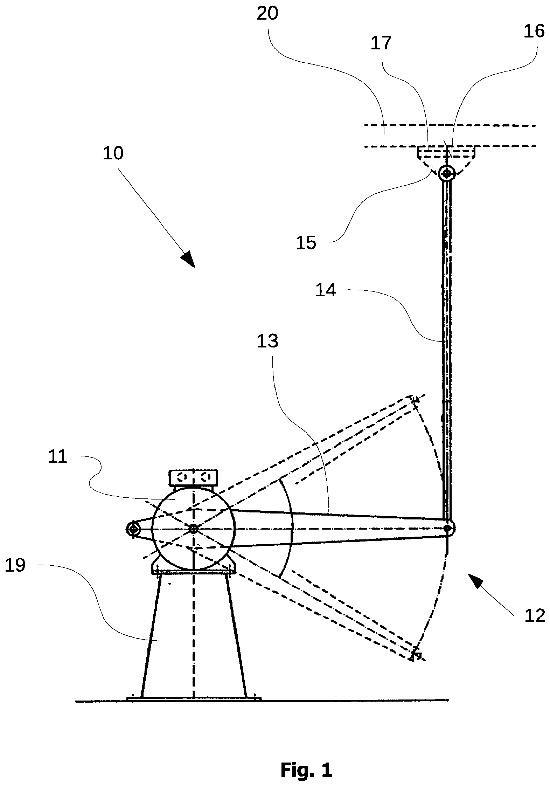

Die beigefügten Figuren zeigen jeweils schematisch einen Schwingungserreger 10 zur Belastungsprüfung eines Rotorblatts 20. Das Rotorblatt 22 ist aus Gründen der Übersichtlichkeit in Figur 1 lediglich abschnittsweise durch gestrichelte Linien dargestellt. Im Testbetrieb ist das Rotorblatt 20 vorzugsweise mit seiner Rotorblattwurzel an einer Tragstruktur, beispielsweise einem fest am Boden verankerten Sockel, fixiert und erstreckt sich von dem Sockel ausgehend im Wesentlichen in horizontaler Richtung. Das Rotorblatt 20 bildet insoweit einen Kragarm. Beabstandet von der Tragstruktur ist der Schwingungserreger 10 angeordnet.

Der Schwingungserreger 10 umfasst einen Direktantrieb, der in den dargestellten Ausführungsbeispielen gemäß Figuren 1 bis 3 einen Elektromotor 11 umfasst. Der Elektromotor 11 weist eine Motorwelle auf, die direkt mit einem Hebel 13 eines Hebelmechanismus 12 verbunden ist. Der Hebel 13 bildet im Wesentlichen einen Schwingarm. Der Hebel 13 ist drehfest mit der Motorwelle verbunden, so dass eine Rotation der Motorwelle unmittelbar in eine Schwenkbewegung des Hebels 13 umgesetzt wird.

In Figur 1 sind unterschiedliche Auslenkgrade des Hebels 13 durch gestrichelte Linien angedeutet. Es ist erkennbar, dass der Elektromotor 11 so angesteuert bzw. ansteuerbar ist, dass eine Schwenkauslenkung des Hebels 13 ausgehend von einer horizontalen Ausgangslage von etwa +/- 30° erreicht wird.

Der Hebelmechanismus 12 umfasst ferner eine Pendelstütze 14, die gelenkig mit dem Hebel 13 verbunden ist. Insbesondere ist die Pendelstütze 14 so mit dem Hebel 13 verbunden, dass sich in einer horizontalen Ausrichtung des Hebels 13 ein rechter Winkel zwischen der Pendelstütze 14 und dem Hebel 13 einstellt. Je nach gewünschten Prüfszenarien kann jedoch vorgesehen sein, dass der Winkel zwischen dem Hebel 13 und der Pendelstütze 14 variiert wird.

Die Pendelstütze 14 ist ferner mit einer Koppeleinrichtung 15 gelenkig verbunden, die eine Auflagefläche 16 umfasst. Die Koppeleinrichtung 15 stellt mit der Auflagefläche 16 eine erhöhte Kontaktfläche bereit, auf welcher das Rotorblatt 20 im Testbetrieb aufliegt. Konkret ist vorgesehen, dass Ausgleichselemente 17, beispielsweise umfassend ein Elastomer 23, mit dem Rotorblatt 20 verklebt sind, wobei die Ausgleichselemente 17 auf der Auflagefläche 16 der Koppeleinrichtung 15 aufliegen. Die Ausgleichselemente 17 können im Wesentlichen fliesenartige Elastomerpads bilden, die einerseits dazu dienen, eine plane Auflagefläche für die Koppeleinrichtung 15 bereitzustellen, also einen Ausgleich zwischen der gewölbten Außenhaut des Rotorblatts 20 und der planen Auflagefläche 16 der Koppeleinrichtung 15 bewirken. Andererseits dienen die Ausgleichselemente 17 dazu, die Außenhaut des Rotorblatts 20 vor Beschädigungen zu schützen. Die Koppeleinrichtung 15 kann zusätzlich mit den Ausgleichselementen 17 fest verbunden sein, beispielsweise durch Verschrauben oder durch eine geeignete Verriegelung. Eine Verschraubung zwischen der Koppeleinrichtung 15 und den Ausgleichselementen 17 und eine Verklebung zwischen den Ausgleichselementen 17 und dem Rotorblatt 20 ist bevorzugt, da die Ausgleichselemente 17 sowohl Zug- und Druckkräfte als auch Schubkräfte übertragen.

Der gesamte Schwingungserreger 10 ist vorzugsweise auf einem Fundament 19 montiert, das beispielsweise in einer Grube einer Testanlage für die Belastungsprüfung eines Rotorblatts angeordnet sein kann. Insoweit ist der Schwingungserreger 10, insbesondere der Direktantrieb, vorzugsweise ortsfest angeordnet.

Die gelenkigen Verbindungen zwischen dem Hebel 13 und der Pendelstütze 14 bzw. zwischen der Pendelstütze 14 und der Koppeleinrichtung 15 sind vorzugsweise als sphärische Lager ausgebildet, so dass auch Bewegungen und Kraftübertragungen in allen Richtungen möglich sind. Dies schont den Hebelmechanismus 12 und ermöglicht weitere Anwendungen für komplexe Belastungsprüfungen des Rotorblatts 20.

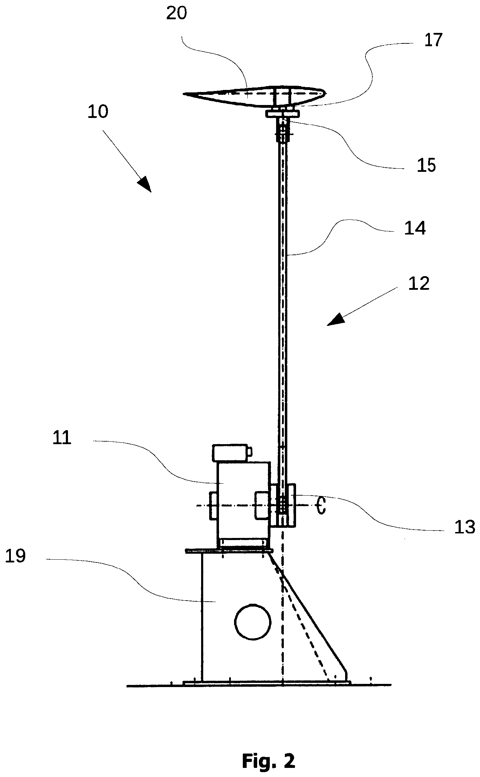

In Figur 2 ist erkennbar, dass die Ausgleichselemente 17 einerseits der gewölbten Außenhaut des Rotorblatts 20 folgen und andererseits eine plane Kontaktfläche bereitstellen, so dass die Ausgleichselemente 17 gut und flächig auf der Auflagefläche 16 der Koppeleinrichtung 15 aufliegen.

Bei der Anordnung des Schwingungserregers 10 gemäß Figuren 1 und 2 ist vorgesehen, dass der Schwingungserreger 10 unterhalb des Rotorblatts 20 ortsfest fixiert ist. Der Hebel 13 ist fest mit der Motorwelle des Elektromotors 11 verbunden. Wenn die Koppeleinrichtung 15 über die Ausgleichselemente 17 mit dem Rotorblatt 20 verbunden ist, wird das Rotorblatt 20 durch die Masse des Schwingungserregers 10 bzw. die Massen von Ausgleichselementen 17, Koppeleinrichtung 15, Pendelstütze 14 und Hebelanteil nicht wesentlich belastet.

Die im Betrieb schwingende Masse ist somit hauptsächlich durch die Masse des Rotorblatts 20 bestimmt, so dass die Schwingungsprüfung bei einer höheren Frequenz durchgeführt werden kann. Damit verkürzt sich die Prüfzeit erheblich im Vergleich zu der Verwendung von Schwingungserregern, die auf dem Rotorblatt 20 montiert werden und der schwingenden Masse ihre Eigenmasse vollständig hinzufügen.

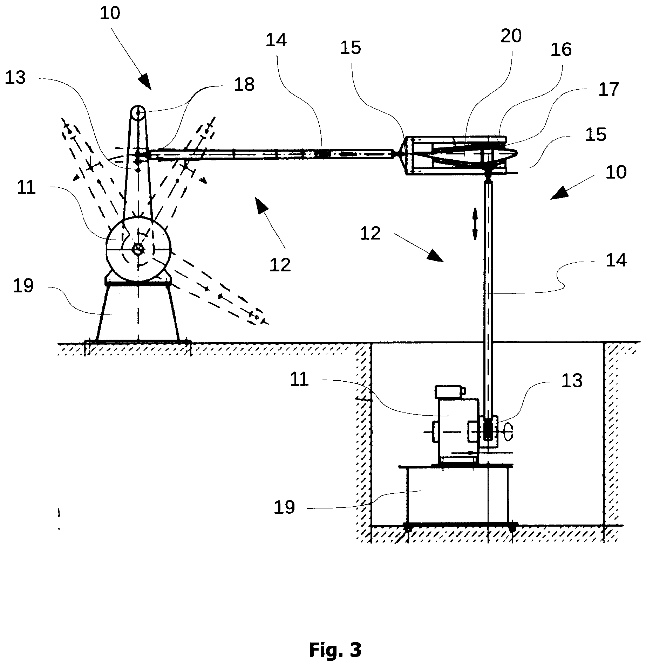

Der Schwingungserreger 10 kann außerdem eingesetzt werden, um besonders komplexe Belastungssituationen realitätsnah nachzubilden. Beispielsweise kann der Schwingungserreger 10 nicht nur zur Anregung einer Schwingung des Rotorblatts 20 in Schlagrichtung genutzt werden, wie dies in den Figuren 1 und 2 dargestellt ist. Vielmehr ist es auch möglich, den Schwingungserreger zur Anregung einer Schwingung des Rotorblatts 20 in Schwenkrichtung zu nutzen. Dies ist in Figur 3 gezeigt. Zur Anregung einer Schwingung des Rotorblatts 20 in Schwenkrichtung ist der Schwingungserreger 10 vorzugsweise seitlich des Rotorblatts 20 ortsfest positioniert. Dabei steht in einer Ruhestellung der Hebel 13 des Hebelmechanismus 12 vorzugsweise senkrecht bzw. vertikal, wobei die Pendelstütze 14 im rechten Winkel zum Hebel 13 bzw. horizontal ausgerichtet ist. Die Koppeleinrichtung 15 umfasst ergänzend zwei Schenkel, die das Rotorblatt 20 umgreifen und jeweils eine Auflagefläche 16 für die Ausgleichselemente 17 bereitstellen.

Zusätzlich zu dem Schwingungserreger 10, der seitlich des Rotorblatts 20 ortsfest fixiert ist und eine Schwingung in Schwenkrichtung des Rotorblatts anregt, kann ein Schwingungserreger 10 unterhalb des Rotorblatts 20 angeordnet sein, um eine Schwingung in Schlagrichtung des Rotorblatts 20 anzuregen. Bei entsprechender Ansteuerung der beiden Schwingungserreger 10 können komplexe Belastungssituationen nachgebildet werden.

Figur 3 zeigt außerdem deutlich, dass der Schwingungserreger 10, der zur Anregung einer Schwingung des Rotorblatts in Schlagrichtung vorgesehen ist, vorzugsweise in einer Grube positioniert ist. Der komplette Aufbau des Schwingungserregers 10 erlaubt es insofern, eine relativ schmale Grube vorzusehen, was insgesamt die Herstellungskosten für einen entsprechenden Prüfstand reduziert. Bei ausreichender Höhe der Versuchshalle oder bei Nutzung des Schwingungserregers 10 für einen Prüfstand im Freien, kann der Schwingungserreger 10 auch ebenerdig auf einem Podest oder ohne Podest auf geeignetem Untergrund stehen. Vorzugsweise ist in diesen Fällen eine schmale Grube vorgesehen, in welchen der Hebel 13 mit der Pendelstütze 14 eintauchen kann.

In Figur 3 ist außerdem erkennbar, dass der Hebel 13 vorzugsweise mehrere Rastpunkte 18 aufweist, um die wirksame Hebellänge einstellen zu können. Insbesondere kann die Pendelstütze 14 an unterschiedlichen Rastpunkten 18 gelenkig gelagert werden, so dass die Hebellänge und somit die Höhe der Krafteinleitung bzw. die Amplitude der oszillierenden Schwingungsbewegung, eingestellt werden kann. Ferner kann vorgesehen sein, dass die Pendelstütze 14 mehrere Rastpunkte (nicht dargestellt) aufweist, um die Pendelstütze 14 in ihrer Länge zu verstellen.

Besonders bevorzugt ist es, wenn die Pendelstütze eine Verstelleinrichtung besitzt, die eine Längenverstellung über einen Reibschluss ermöglicht. Eine solche Verstelleinrichtung bietet eine besondere Sicherheit, da über die Höhe der Haftreibung ein bestimmter Reibwert voreingestellt werden kann, bei dessen Überschreitung sich die Länge der Pendelstütze 14 ändert. Beispielsweise kann der Reibschluss bei Überschreitung einer zulässigen Last überwunden und so eine Längenänderung der Pendelstütze 14 eingeleitet werden. Dies vermeidet eine Beschädigung des Hebelmechanismus 12.

Für alle Ausführungsbeispiele gilt bevorzugt, dass der Elektromotor 11 durch einen Synchron-Hohlwellen-Torque-Elektromotor oder einen Synchron-Vollwellen-Torque-Elektromotor gebildet ist. Der Elektromotor 11 kann eine Wasserkühlung aufweisen. Die Leistung des Elektromotors 11 wird entsprechend den jeweiligen Belastungsanforderungen gewählt. Vorzugsweise kommen Elektromotoren 11 zum Einsatz, deren Betriebsdrehmoment bei etwa 20 kNm bis 30 kNm, vorzugsweise bei 25 kNm, liegt. Das Spitzendrehmoment des Elektromotors 11 kann zwischen 30 kNm und 50 kNm, bevorzugt 40 kNm, betragen.

Die Drehzahl des Elektromotors 11 ist stufenlos steuerbar und kann bspw. zwischen 10 U/min und 30 U/min betragen. Bevorzugt ist es, wenn die Drehzahl höchstens 31 U/min beträgt. Die erreichbare Schwingfrequenz des Rotorblatts beträgt bspw. bei einem Schwenkwinkel von ±30° und einem Sinusverlauf etwa 1 Hz. Bei kleinerem Schwenkwinkel erhöht sich die Schwenkfrequenz entsprechend.

Der Elektromotor 11 wird vorzugsweise im Umrichterbetrieb gesteuert. Im Wesentlichen weist der Schwingungserreger 10 eine Steuerung auf, die eine zyklische oszillierende Rotationsbewegung des Elektromotors 11 bewirkt. Der Elektromotor 11 erzeugt insoweit ein sinusförmig verlaufendes Drehmoment, wobei das Drehmoment des Elektromotors 11, ausgehend von der Ruhelage des Hebels 13 bis zum Erreichen der vorbestimmten Weglänge bzw. Schwenkauslenkung gesteigert wird.

Zu Beginn des Prüfbetriebs wird das in Ruhelage befindliche Rotorblatt 20 durch das sinusförmig verlaufende Motordrehmoment, das über den zunächst in waagrechter Lage befindlichen Hebel 13, die Pendelstütze 14, die Koppeleinrichtung 15 und das Ausgleichselement 17 als weitgehend senkrechte Kraft auf das Rotorblatt 20 wirkt, mit kleiner Kraft und bekannter Frequenz auf- und abwärts bewegt. Die Kraft wird so lange gesteigert, bis das Rotorblatt 20 mit der gewünschten Amplitude ausgelenkt wird. Beispielsweise kann eine Schwenkauslenkung von ± 1,5m an der Stelle, an welcher die Pendelstütze 14 angreift, als Zielvorgabe vorgesehen sein.

An den Umkehrpunkten des Rotorblattes 20 nimmt das Drehmoment vorauseilend ab, so dass es die Rotorblattbewegung nicht behindert. Der sinusförmige Verlauf des Motor-Drehmoments kann bei Bedarf mittels der Motorsteuerung verändert werden.

Das Drehmoment erreicht an den oberen und unteren Umkehrpunkten des Hebels seinen Höchstwert und geht in der Horizontallage des Hebels auf Null, bzw. ändert hier die Drehrichtung. Das Rotorblatt wird also jeweils ab Ausgangslage nach oben gedrückt und nach unten gezogen. Die Ruhelage bzw. Ausgangslage des Hebels 13 ist bei einer Anregung einer Schwingung in Schwenkrichtung im Wesentlichen vertikal, bei einer Anregung einer Schwingung in Schlagrichtung vorzugsweise horizontal.

Die Leistung des Elektromotors kann zwischen 60 kW und 100 kW, vorzugsweise 80 kW, betragen. Der Hebel 13 hat eine mittels Rastpunkte 18 variabel einstellbare Länge, wobei die Rastpunkte 18 derart angeordnet sind, dass eine Hebellänge zwischen 1,5 m bis 3 m einstellbar ist. Die Verstellung der Hebellänge kann auch stufenlos erfolgen. Die Pendelstütze 14 ist ebenfalls in Stufen oder stufenlos längenverstellbar, wobei bspw. eine Länge der Pendelstütze 14 zwischen 2 m und 7 m vorzugsweise von 4 m, vorgesehen ist.

Im Prüfbetrieb wird mittels des Schwingungserregers 10 vorzugsweise eine Schwingung auf das Rotorblatt 20 aufgebracht, deren Frequenz zwischen 0,5 Hz und 1,2 Hz beträgt. Bei einer Anregung des Rotorblatts 20 in Schlagrichtung beträgt die Frequenz vorzugsweise 0,6 Hz. Bei einer Anregung einer Schwingung des Rotorblatts 20 in Schwenkrichtung ist bevorzugt vorgesehen, dass die Schwingungsfrequenz 1 Hz beträgt.

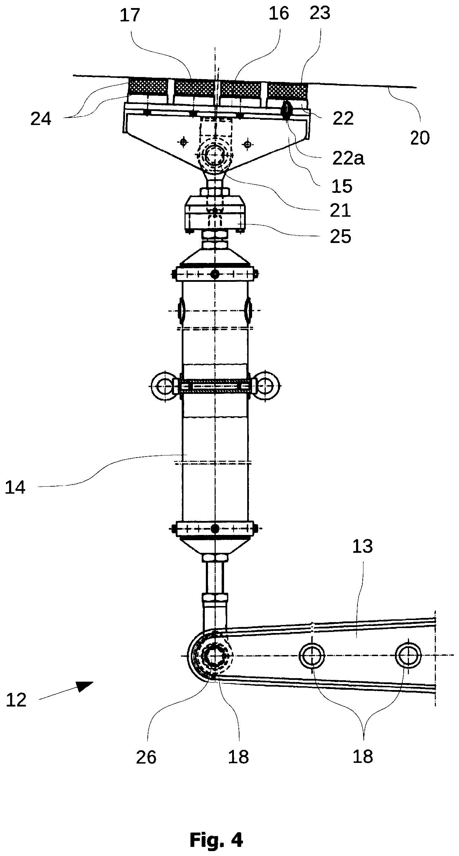

Fig. 4 zeigt im Detail den Hebelmechanismus 12 eines Schwingungserregers 10. Der Hebelmechanismus 12 umfasst einen Hebel 13 und eine Pendelstütze 14. Die Pendelstütze 14 ist an einem Rastpunkt 18 des Hebels 13 mit dem Hebel gelenkig verbunden. Insbesondere ist ein unteres sphärisches Gelenklager 26 vorgesehen. Die Pendelstütze 14 ist ferner über ein oberes sphärisches Gelenklager 21 mit der Koppeleinrichtung 15 verbunden. Unmittelbar in der Nähe des oberen sphärischen Gelenklagers 21 umfasst die Pendelstütze 14 ferner einen Kraftsensor 25. Konkret ist der Kraftsensor 25 unmittelbar unterhalb der Koppeleinrichtung 15 mit der Pendelstütze 14 verbunden.

Die Koppeleinrichtung 15 umfasst eine Auflagefläche 16. Auf der Auflagefläche 16 sind Ausgleichselemente 17 angeordnet. Die Ausgleichselemente 17 umfassen jeweils eine Platte 22 und ein Elastomer 23. Konkret kann die Platte 22 aus einem Aluminium bzw. einer Aluminiumlegierung gebildet sein. Das Elastomer 23 ist mit der Platte 22 vorzugsweise fest verbunden, beispielsweise verklebt. Die Verbindung zwischen der Platte 22 und dem Elastomer 23 erfolgt insbesondere mittels einer Klebeschicht 24.

In der Platte 22 sind ferner mehrere Gewinde 22a ausgebildet. Aus Gründen der Übersichtlichkeit ist in den Figuren jeweils nur Gewinde 22a freigeschnitten. Das Gewinde 22a wirkt mit entsprechenden Schrauben zusammen, die die Koppeleinrichtung 15 mit der Platte 22 verbinden. Konkret ist die Koppeleinrichtung 15 so mit den Ausgleichselementen 17 schraubverbunden.

Die Ausgleichselemente 17 stellen eine Verbindung zwischen der Koppeleinrichtung 15 und einem Rotorblatt 20 her. Dazu ist vorgesehen, dass das Elastomer 23 des Ausgleichselements 17 sich an die Außenkontur des Rotorblatts 20 anpasst. Um sowohl Druckkräfte, als auch Zugkräfte vom Hebelmechanismus 12 auf das Rotorblatt 20 übertragen zu können, ist vorgesehen, dass zwischen dem Elastomer 23 und dem Rotorblatt 20 eine weitere Klebeschicht 24 angeordnet ist. Mit anderen Worten sind die Ausgleichselemente 17 mit einer Außenoberfläche des Rotorblatts 20 verklebt.

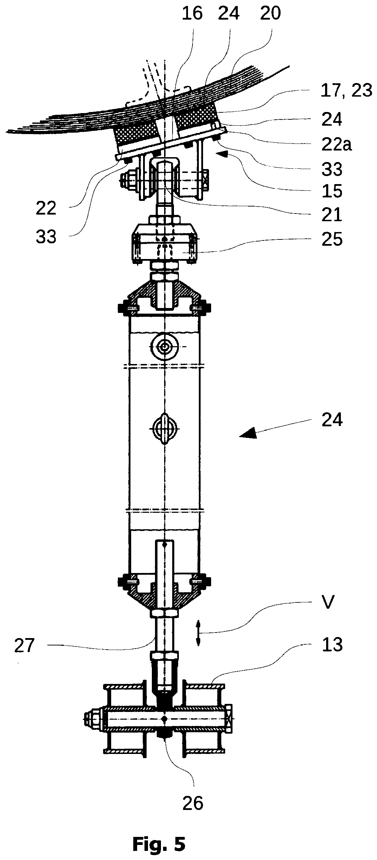

In Fig. 5 ist der Hebelmechanismus gemäß Fig. 4 in einer Vorderansicht gezeigt. Gut erkennbar ist einerseits das obere sphärische Gelenklager 21 und andererseits das untere sphärische Gelenklager 26. Mittels der sphärischen Gelenklager 21, 26 ist die Pendelstütze 14 mit der Koppeleinrichtung 15 einerseits und dem Hebel 13 andererseits gelenkig verbunden. An ihrem der Koppeleinrichtung 15 zugewandten Ende trägt die Pendelstütze 14 ferner den Kraftsensor 25. An dem dem Hebel 13 zugewandten Ende umfasst die Pendelstütze 14 eine Gewindestange 27, die eine Längenverstellung der Pendelstütze 14 ermöglicht. In Fig. 5 ist der Verstellweg V für die Längenverstellung durch einen Doppelpfeil angedeutet.

In Fig. 5 ist ebenfalls gut erkennbar, dass die Koppeleinrichtung 15 so ausgebildet ist, dass sich die Ausgleichselemente 17 gut an die Außenkontur des Rotorblatts 20 anpassen können. Insbesondere weist die Koppeleinrichtung 15 eine schräg verlaufende Auflagefläche 16 auf, die im Wesentlichen der Neigung der Außenoberfläche des Rotorblatts 20 folgt. Gut erkennbar ist auch die Verschraubung der Koppeleinrichtung 15 mit den Ausgleichselementen 17, insbesondere den Platten 22 der Ausgleichselemente 17. Die für die Verschraubung genutzten Schrauben 33 greifen dabei jeweils in Gewinde 22a der Platten 22 ein.

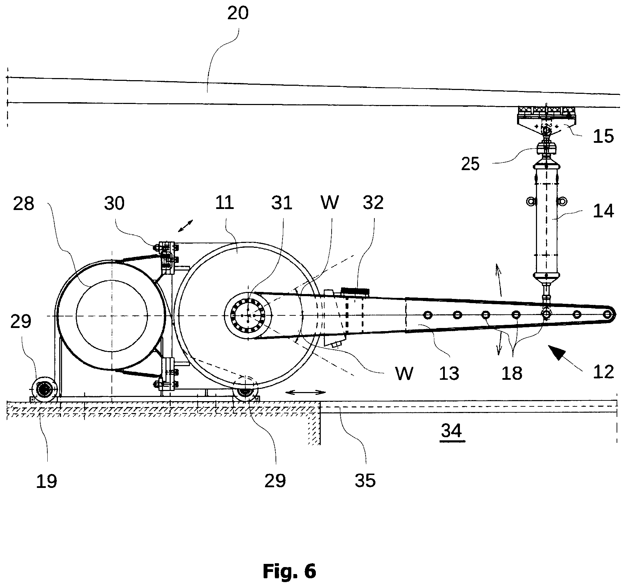

Fig. 6 zeigt in einer Seitenansicht den Schwingungserreger 10, der den Hebelmechanismus 12 aufweist. Hinsichtlich des Hebelmechanismus 12 wird auf die Detaildarstellungen gemäß Fig. 4 und 5 verwiesen. Der Schwingungserreger 10 umfasst ferner den Elektromotor 11, dessen Motorwelle 31 drehfest mit dem Hebel 13 verbunden ist. Konkret ist der Hebel 13 mit der Motorwelle 31 klemmverbunden. An einem dem Elektromotor 11 zugewandten Abschnitt des Hebels 13 ist am Hebel 13 ein elastischer Anschlag 32 vorgesehen. Der elastische Anschlag 32 verhindert eine Beschädigung des Hebels bei Einstellung eines überhöhten Schwenkwinkels W. Der Schwenkwinkel W beträgt vorzugsweise +/-30 Grad und ist in Fig. 6 durch entsprechende Doppelpfeile veranschaulicht.

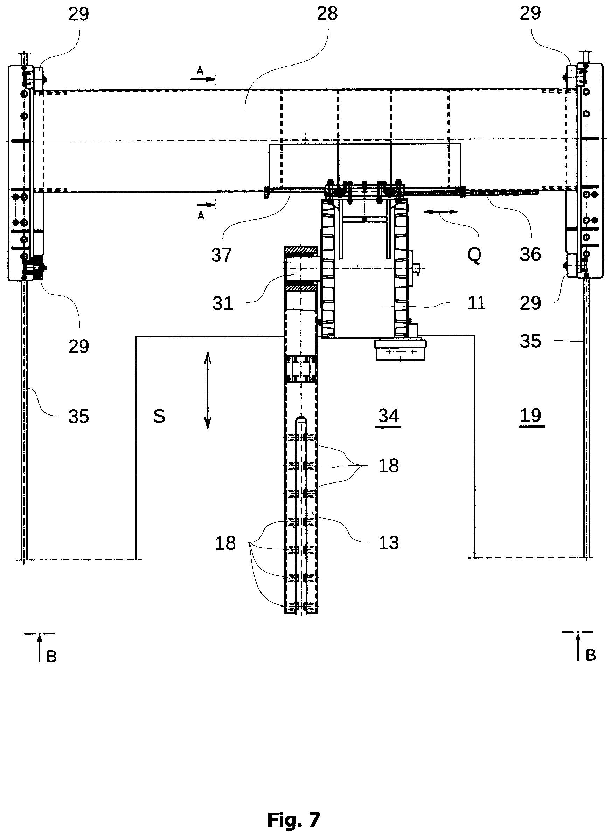

Der Elektromotor 11 ist durch eine Motorbefestigung 30 gehalten, die den Elektromotor 11 mit einem Motorträger 28 verbindet. Die Motorbefestigung 30 ist derart ausgebildet, dass der Elektromotor 11 verstellbar ist. Insbesondere ist eine Verstellung des Elektromotors 11 senkrecht zur Zeichenebene der Fig. 6 möglich. Dies wird im Zusammenhang mit Fig. 7 nachfolgend näher erläutert.

Der Schwingungserreger 10 ist insgesamt verfahrbar gestaltet, wobei am Motorträger 28 Fahrrollen 29 gelagert sind. Die Fahrrollen 29 sind teilweise mittels einer Exzenter-Mechanik höhenverstellbar. Die Fahrrollen 29 rollen auf Ankerschienen 35 ab, die in das Fundament 19 des Prüfstands eingelassen sind. Die Ankerschienen überspannen ferner eine Grube 34, die in das Fundament 19 eingelassen ist. Die Grube 24 ermöglicht dem Hebel 13 frei in beide Richtungen zu schwingen. Konkret bietet die Grube 24 den notwendigen Freiraum für den Hebel 13, um nach unten zu schwingen und so eine Zuglast auf das Rotorblatt 20 aufzubringen.

In der Draufsicht auf den Schwingungserreger 10 gemäß Fig. 7 ist erkennbar, dass der Elektromotor 11 seitlich, insbesondere quer zu einer Längsachse des zu prüfenden Rotorblatts 20, verstellbar ist. Dazu sind am Motorträger 28 Motorführungen 37 vorgesehen. Die Verstellung des Elektromotors 11 erfolgt über eine Gewindespindel 36, die drehbar am Motorträger 28 gelagert ist. Mittels der Gewindespindel 36 kann der Elektromotor 11 entlang der Motorführung 37 verfahren werden. Der Hebel 13 des Schwingungserregers 10 ist in Fig. 7 in einer Schnittdarstellung gezeigt. Dabei ist gut erkennbar, dass der Hebel 13 mit der Motorwelle 31 des Elektromotors 11 drehfest verbunden ist. Die Verbindung zwischen dem Hebel 13 und der Motorwelle 31 erfolgt vorzugsweise durch eine Klemmverbindung.

Der Motorträger 28 ist mittels der Fahrrollen 29, die höhenverstellbar sein können, entlang der Ankerschienen 35 verfahrbar. Die Ankerschienen 35 verlaufen vorzugsweise parallel zu einer Längsachse des zu prüfenden Rotorblatts 20. Der Verschiebeweg S des Schwingungserregers 10 ist in Fig. 7 durch einen entsprechenden Doppelpfeil veranschaulicht. Der Querverstellweg Q des Elektromotors 11 entlang der Motorführung 37 ist ebenfalls durch einen entsprechenden Doppelpfeil gekennzeichnet.

In Fig. 7 ist in der Draufsicht auf den Hebel 13, der ohne Pendelstange 14 dargestellt ist, ebenfalls gut erkennbar, dass der Hebel 13 mehrere Rastpunkte 18 aufweist. Mittels der Rastpunkte 18 kann die Pendelstütze 14 an unterschiedlichen Längenpositionen des Hebels 13 mit dem Hebel 13 verbunden werden. Somit kann die wirksame Hebelarmlänge beliebig eingestellt werden.

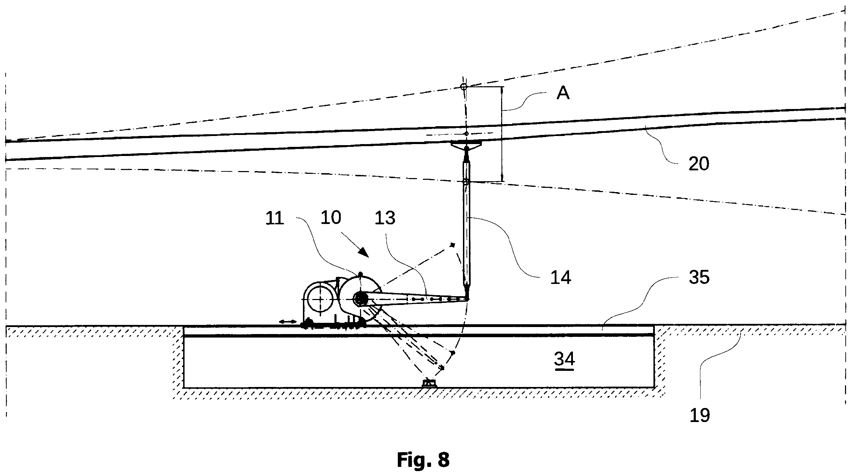

Fig. 8 zeigt den Schwingungserreger 10 in einer Seitenansicht im Betrieb, d.h. bei der Schwingungsprüfung eines Rotorblatts 20. Der Schwingungserreger 10 ist auf den Ankerschienen 35 gelagert, die die Grube 34 überspannen. Die Grube 34 ist in das Fundament 19 des Prüfstands eingelassen. Durch gestrichelte bzw. strichpunktierte Linien ist die Bewegung des Hebels 13 des Schwingungserregers 10 angedeutet. Es ist erkennbar, dass der Hebel 13 oszillierend durch den Elektromotor 11 auf- und abgeschwenkt wird. Die Schwenkbewegung wird über die Pendelstütze 14 auf das Rotorblatt 20 übertragen, das in der Folge mit einer Schwingweite A schwingt. Je nach Länge des zu prüfenden Rotorblatts und je nach gewünschter Schwingweite A kann das Rotorblatt 20 in unterschiedlichen Höhenpositionen über dem Fundament 19 fixiert werden. Eine Höherstellung des Rotorblattes 20 erfolgt normalerweise durch Schrägstellung nach oben, hier beispielsweise um 2°. Somit ist auch eine Anpassung an die Höhe der Versuchshalle möglich. Um dennoch eine adäquate Schwingungsprüfung vornehmen zu können, ist vorgesehen, dass die Pendelstütze 14 längenverstellbar ist. Durch die Längenverstellbarkeit der Pendelstütze 14 können so Differenzen im Höhenabstand des Rotorblatts 20 vom Fundament 19 ausgeglichen werden. Die Höhenverstellung der Pendelstütze 14 erfolgt mittels der Gewindestange 27 (Fig. 5) oder einem teleskopartigen Aufbau bzw. durch einen Austausch des Mittelteiles der Pendelstütze 14.

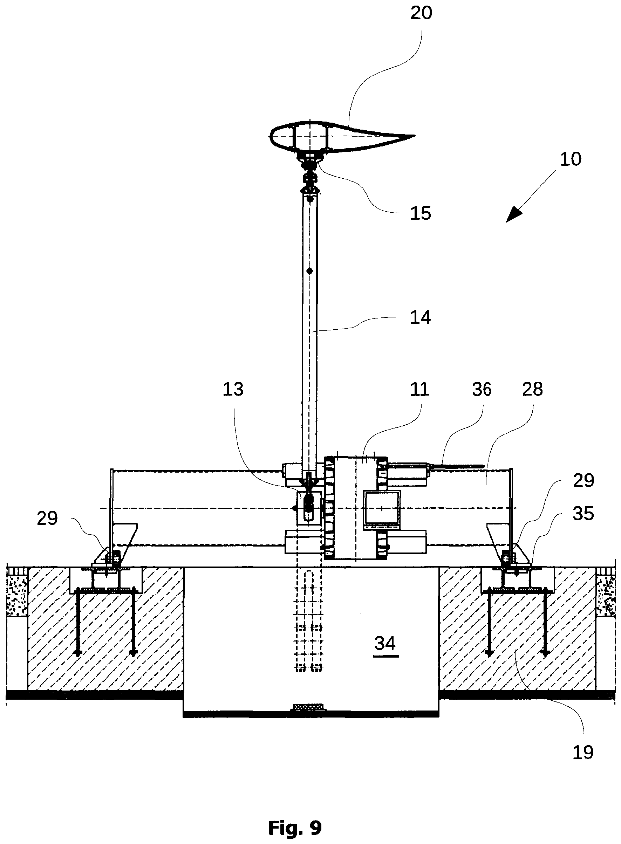

Fig. 9 zeigt eine Schnittansicht entlang der Linie A-A in Fig. 7. Im Detail sind in Fig. 9 die Ankerschienen 35 erkennbar, die in das Fundament 19 eingelassen sind. Ferner ist ein Querschnitt durch die Grube 34 zu sehen, die ebenfalls in das Fundament 19 eingelassen ist bzw. von dem Fundament 19 begrenzt wird. Mit gestrichelten Linien ist der Hebel 13 in einer Position angedeutet, in welcher er in die Grube 34 hineinragt. In der Ruhestellung verläuft der Hebel 13 vorzugsweise waagrecht. Der Motorträger 28 erstreckt sich zwischen den beiden parallel verlaufenden Ankerschienen 35 und überspannt ebenfalls die Grube 34. Am Motorträger ist der Elektromotor 11 gelagert, der über eine Gewindespindel 36 entlang des Motorträgers 28 verstellbar ist. Der Hebel 13 ist mit der Motorwelle 31 des Elektromotors 11 verbunden und wirkt über die Pendelstütze und die Koppeleinrichtung 15 auf das Rotorblatt 20 ein.

### Bezugszeichenliste

- 10: Schwingungserreger
- 11: Elektromotor
- 12: Hebelmechanismus
- 13: Hebel
- 14: Pendelstütze
- 15: Koppeleinrichtung
- 16: Auflagefläche
- 17: Ausgleichselement
- 18: Rastpunkt
- 19: Fundament
- 20: Rotorblatt
- 21: oberes Sphärisches Gelenklager
- 22: Platte
- 22a: Gewinde
- 23: Elastomer
- 24: Klebeschicht
- 25: Kraftsensor
- 26: unteres Sphärisches Gelenklager
- 27: Gewindestange
- 28: Motorträger
- 29: Fahrrollen
- 30: Motorbefestigung
- 31: Motorwelle
- 32: Elastischer Anschlag
- 33: Schraube
- 34: Grube
- 35: Ankerschiene
- 36: Gewindespindel
- 37: Motorführung
- A: Schwingweite
- Q: Querverstellweg
- S: Verschiebeweg
- V: Verstellweg
- W: Schwenkwinkel

## Patentansprüche

1. Schwingungserreger (10) zur Belastungsprüfung eines Rotorblatts (20) mit einem Direktantrieb, der über einen Hebelmechanismus (12) mit dem Rotorblatt (20) verbindbar ist, wobei der Hebelmechanismus (12) eine Pendelstütze (14), die mit einer Koppeleinrichtung (15) zur Kraftübertragung auf das Rotorblatt (20) verbunden ist, und einen Hebel (13) aufweist, der mit der Pendelstütze (14) gelenkig verbunden ist
**dadurch gekennzeichnet, dass**
der Direktantrieb
- einen Elektromotor (11),
- eine Motorwelle, mit welcher der Hebel (13) drehfest verbunden ist, und
- eine Steuerung aufweist, die zur Erzeugung einer zyklisch oszillierenden Rotationsbewegung des Elektromotors (11) konfiguriert ist.

2. Schwingungserreger (10) nach Anspruch 1,
**dadurch gekennzeichnet, dass**
die Koppeleinrichtung (15) eine Auflagefläche (16) für Ausgleichs- und/oder Kraftübertragungselemente (17, 23) aufweist, die mit dem Rotorblatt (20) klebeverbindbar sind.

3. Schwingungserreger (10) nach Anspruch 2,
**dadurch gekennzeichnet, dass**
mehrere Ausgleichs- und/oder Kraftübertragungselemente (17, 23) für eine großflächige Krafteinleitung in das Rotorblatt (20) vorgesehen sind.

4. Schwingungserreger (10) nach einem der vorhergehenden Ansprüche,
**dadurch gekennzeichnet, dass**
die Pendelstütze (14) mit der Koppeleinrichtung (15) und/oder dem Hebel (13) durch jeweils ein sphärisches Lager verbunden ist.

5. Schwingungserreger (10) nach einem der vorhergehenden Ansprüche,
**dadurch gekennzeichnet, dass**
der Hebel (13) und/oder die Pendelstütze (14) längenverstellbar ist.

6. Schwingungserreger (10) nach einem der vorhergehenden Ansprüche,
**dadurch gekennzeichnet, dass**
der Hebel (13) und/oder die Pendelstütze (14), Rastpunkte (18) oder eine Einrichtung zur stufenlosen Positionseinstellung aufweist, so dass die Pendelstütze (14) zur Einstellung unterschiedlicher Hebelarmlängen an unterschiedlichen Positionen entlang des Hebels (13) arretierbar ist.

7. Schwingungserreger nach Anspruch 6,
**dadurch gekennzeichnet, dass**
die Pendelstütze (14) einen Verstellmechanismus für die Längenverstellung aufweist, der eine mittels Reibschluss voreinstellbare Lastgrenze aufweist.

8. System zur Belastungsprüfung eines Rotorblatts (20) mit einer ortsfest positionierten oder positionierbaren Tragstruktur, an der ein axiales Ende des Rotorblatts (20) befestigbar ist, und wenigstens einem Schwingungserreger (10) nach einem der vorhergehenden Ansprüche, wobei der Schwingungserreger (10) ortsfest positioniert oder positionierbar ist.

9. Prüfstand für ein Rotorblatt (20) mit wenigstens zwei Schwingungserregern (10) oder Systemen nach einem der vorhergehenden Ansprüche.

10. Prüfstand nach Anspruch 9,
**dadurch gekennzeichnet, dass**
ein erster Schwingungserreger (10) zur Anregung einer Schwingung des Rotorblatts (20) in Schlagrichtung im Wesentlichen unterhalb des Rotorblatts (20) und ein zweiter Schwingungserreger (10) zur Anregung einer Schwingung des Rotorblatts (20) in Schwenkrichtung im Wesentlichen seitlich des Rotorblatts (20) positionierbar sind.

11. Anordnung mit einem System oder einem Prüfstand nach einem der Ansprüche 8 bis 10 und einem Rotorblatt (20), wobei ein axiales Ende des Rotorblatts (20) an der Tragstruktur befestigt ist und das Rotorblatt (20) an einer von der Tragstruktur beabstandeten Position mittels Ausgleichselementen (17) auf der Koppeleinrichtung (15) aufliegt, die mit einer Außenhaut des Rotorblatts (20) klebeverbunden sind.

12. Verfahren zum Betreiben eines Schwingungserregers (10), eines Systems, eines Prüfstands oder einer Anordnung nach einem der vorhergehenden Ansprüche, wobei der Direktantrieb eine oszillierende Rotationsbewegung ausführt und eine Schwingungsanregung erzeugt, die über den Hebelmechanismus (12) auf das Rotorblatt (20) übertragbar ist oder übertragen wird.

13. Verfahren nach Anspruch 12,
**dadurch gekennzeichnet, dass**
der Direktantrieb mit einer variablen Drehfrequenz zwischen 0,1 Hz und 2,5 Hz betrieben wird.

## Claims

1. A vibration exciter (10) for load testing a rotor blade (20), having a direct drive, which can be connected to the rotor blade (20) via a lever mechanism (12), wherein the lever mechanism (12) has a pendulum support (14), which is connected to a coupling device (15) for force transmission to the rotor blade (20), and a lever (13), which is connected in an articulated manner to the pendulum support (14),
**characterized in that**
the direct drive has
- an electric motor (11),
- a motor shaft, to which the lever (13) is connected in a rotationally fixed manner, and
- a control, which is configured for generating a cyclically oscillating rotational movement of the electric motor (11).

2. The vibration exciter (10) according to Claim 1,
**characterized in that**
the coupling device (15) has a bearing surface (16) for compensating and/or force transmission elements (17, 23), which can be adhesively bonded to the rotor blade (20) .

3. The vibration exciter (10) according to Claim 2,
**characterized in that**
a plurality of compensating and/or force transmission elements (17, 23) are provided for a large-area introduction of force into the rotor blade (20).

4. The vibration exciter (10) according to one of the preceding claims,
**characterized in that**
the pendulum support (14) is connected to the coupling device (15) and/or the lever (13) by a spherical bearing in each case.

5. The vibration exciter (10) according to one of the preceding claims,
**characterized in that**
the lever (13) and/or the pendulum support (14) have an adjustable length.

6. The vibration exciter (10) according to one of the preceding claims,
**characterized in that**
the lever (13) and/or the pendulum support (14) has click stop positions (18) or a device for infinitely adjustable position adjustment, so that the pendulum support (14) can be locked in position at different positions along the lever (13) for setting different lever arm lengths.

7. The vibration exciter according to Claim 6,
**characterized in that**
the pendulum support (14) has an adjustment mechanism for length adjustment, which has a load limit that can be preset by means of frictional adhesion.

8. A system for load testing a rotor blade (20) having a support structure, which is or can be positioned in a stationary manner and on which an axial end of the rotor blade (20) can be fastened, and at least one vibration exciter (10) according to one of the preceding claims, wherein the vibration exciter (10) is or can be positioned in a stationary manner.

9. A test rig for a rotor blade (20) having at least two vibration exciters (10) or systems according to one of the preceding claims.

10. The test rig according to Claim 9,
**characterized in that**
a first vibration exciter (10) can be positioned essentially below the rotor blade (20) for exciting a vibration of the rotor blade (20) in the impact direction and a second vibration exciter (10) can be positioned essentially to the side of the rotor blade (20) for exciting a vibration of the rotor blade (20) in the pivoting direction.

11. An arrangement having a system or a test rig according to one of Claims 8 to 10 and a rotor blade (20), wherein an axial end of the rotor blade (20) is fastened on the support structure and the rotor blade (20) rests on the coupling device (15) at a position spaced from the support structure by means of compensating elements (17), which are adhesively bonded to an outer skin of the rotor blade (20).

12. A method for operating a vibration exciter (10), a system, a test rig or an arrangement according to one of the preceding claims, wherein the direct drive executes an oscillating rotational movement and creates vibrational excitation, which can be or is transmitted via the lever mechanism (12) onto the rotor blade (20).

13. The method according to Claim 12,
**characterized in that**
the direct drive is operated with a variable rotational speed between 0.1 Hz and 2.5 Hz.

## Revendications

1. Excitateur de vibrations (10) pour tester en charge une pale de rotor (20) comportant un entraînement direct qui peut être raccordé à la pale de rotor (20) via un mécanisme à levier (12), dans lequel le mécanisme à levier (12) présente un support pendulaire (14), qui est raccordé à un dispositif d'accouplement (15) en vue de la transmission de puissance à la pale de rotor (20), et un levier (13), qui est relié de manière articulée au support pendulaire (14),
**caractérisé en ce que**
l'entraînement direct présente
- un moteur électrique (11),
- un arbre moteur auquel le levier (13) est raccordé de manière fixe en rotation, et
- une unité de commande, qui est configurée pour générer un mouvement de rotation oscillant cycliquement du moteur électrique (11).

2. Excitateur de vibrations (10) selon la revendication 1,
**caractérisé en ce que**
le dispositif d'accouplement (15) présente une surface d'appui (16) pour des éléments de compensation et/ou de transmission d'effort (17, 23) qui peuvent être reliés par collage à la pale de rotor (20).

3. Excitateur de vibrations (10) selon la revendication 2,
**caractérisé en ce que**
plusieurs éléments de compensation et/ou de transmission de force (17, 23) sont prévus pour une introduction de force sur une grande surface dans la pale de rotor (20).

4. Excitateur de vibrations (10) selon une des revendications précédentes,
**caractérisé en ce que**
le support pendulaire (14) est relié par un palier sphérique au dispositif d'accouplement (15) et/ou au levier (13).

5. Excitateur de vibrations (10) selon une des revendications précédentes,
**caractérisé en ce que**
le levier (13) et/ou le support pendulaire (14) est réglable en longueur.

6. Excitateur de vibrations (10) selon une des revendications précédentes,
**caractérisé en ce que**
le levier (13) et/ou le support pendulaire (14) présente des points de verrouillage (18) ou un dispositif de réglage de position en continu, de sorte que le support pendulaire (14) pour le réglage de différentes longueurs de bras de levier puisse être verrouillé à différentes positions le long du levier (13) .

7. Excitateur de vibrations selon la revendication 6,
**caractérisé en ce que**
le support pendulaire (14) présente un mécanisme de réglage pour le réglage de la longueur, qui a une limite de charge qui peut être préréglée au moyen d'un engagement par friction.

8. Système pour tester en charge une pale de rotor (20) comportant une structure de support fixe ou positionnable à laquelle une extrémité axiale de la pale de rotor (20) peut être fixée, et au moins un excitateur de vibrations (10) selon une des revendications précédentes, dans lequel l'excitateur de vibrations (10) est fixe ou peut être positionné.

9. Banc d'essai pour une pale de rotor (20) comportant au moins deux excitateurs de vibrations (10) ou systèmes selon une des revendications précédentes.

10. Banc d'essai selon la revendication 9,
**caractérisé en ce que**
un premier excitateur de vibration (10) pour exciter une vibration de la pale de rotor (20) dans la direction de battement peut être positionnée essentiellement en dessous de la pale de rotor (20) et un deuxième excitateur de vibration (10) pour exciter une vibration de la pale de rotor (20) dans la direction de pivotement peut être positionnée essentiellement latéralement à la pale de rotor (20).

11. Agencement comportant un système ou un banc d'essai selon une des revendications 8 à 10 et une pale de rotor (20), dans lequel une extrémité axiale de la pale de rotor (20) est fixée à la structure de support et la pale de rotor (20) vient reposer à une position espacée de la structure de support au moyen des éléments de compensation (17) sur le dispositif d'accouplement (15), qui sont reliés par collage à une membrane extérieure de la pale de rotor (20).

12. Procédé de fonctionnement d'un excitateur de vibrations (10), d'un système, d'un banc d'essai ou d'un agencement selon une des revendications précédentes, dans lequel l'entraînement direct exécute un mouvement de rotation oscillant et génère une excitation vibratoire, qui est transmise ou peut être transmise à la pale de rotor (20) via le mécanisme à levier (12).

13. Procédé selon la revendication 12,
**caractérisé en ce que**
l'entraînement direct fonctionne avec une fréquence de rotation variable entre 0,1 Hz et 2,5 Hz.
